# EUROPÄISCHE PATENTSCHRIFT

(11) **EP 2 630 710 B1**
(45) Veröffentlichungstag und Bekanntmachung des Hinweises auf die Patenterteilung: **25.04.2018**
(21) Anmeldenummer: 11771070.7
(22) Anmeldetag: 10.10.2011
(51) Int. Cl.: H02G 5/06

(54) **MEHRPOLIG GASISOLIERTER SAMMELSCHIENENABSCHNITT**
MULTIPOLE GAS-ISOLATED BUSBAR SECTION
SEGMENT DE BARRE OMNIBUS À ISOLATION GAZEUSE MULTIPOLAIRE

(30) Priorität: 18.10.2010 DE 102010042568
(43) Veröffentlichungstag der Anmeldung: 28.08.2013
(73) Patentinhaber: Siemens Aktiengesellschaft, 80333 München (DE)
(72) Erfinder: PAULUS, Manuela, 13587 Berlin (DE); WAGNER, Eckard, 13585 Berlin (DE)
(86) Internationale Anmeldenummer: PCT/EP2011/067628
(87) Internationale Veröffentlichungsnummer: WO 2012/052311

(56) Entgegenhaltungen:
- DE-A1- 3 119 915
- DE-C1- 10 010 728
- JP-A- 57 129 115
- JP-A- 62 040 008
- US-A- 2 320 093

## Beschreibung

Die Erfindung bezieht sich auf einen mehrpolig gasisolierten Sammelschienenabschnitt mit mehreren voneinander elektrisch isoliert angeordneten, sich im Wesentlichen längs einer Hauptachse erstreckenden Leiterabschnitten, welche mittels eines im Wesentlichen quer zur Hauptachse ausgerichteten Isolierkörpers, an welchem die Leiterabschnitte um die Hauptachse umlaufend verteilt angeordnet sind, relativ zueinander in ihrer Lage festgelegt sind.

Ein derartig mehrpolig gasisolierter Sammelschienenabschnitt ist beispielsweise aus der Patentschrift DE 100 10 728 C1 bekannt. Der dortige mehrpolig gasisolierte Sammelschienenabschnitt weist mehrere sich längs einer Hauptachse erstreckende Leiterabschnitte auf. Die Leiterabschnitte sind relativ zueinander mittels eines quer zur Hauptachse ausgerichteten Isolierkörpers positioniert, wobei die Leiterabschnitte um die Hauptachse umlaufend verteilt angeordnet sind.

Der dortige Isolierkörper weist eine sternförmige Struktur mit drei Armen auf, welche symmetrisch um die Hauptachse herum verteilt angeordnet sind und sich radial zur Hauptachse erstrecken. Bei der Übertragung von hohen Leistungen können hohe Kurzschlussströme auftreten, welche erhöhte Kraftwirkungen zwischen den Leiterabschnitten bewirken. Diese Kräfte müssen von dem Isolierkörper aufgenommen werden. Bei der bekannten Anordnung ist der Isolierkörper hinsichtlich der Beherrschung von Kurzschlusskräften entsprechend massiv auszuführen, da jeder der von der Hauptachse fortragenden Arme des Isolierkörpers für sich entsprechende Kräfte aufnehmen und beherrschen muss. Entsprechend großvolumige Isolierkörper sind die Folge. Des Weiteren ist bei der Verwendung von höheren Spannungen das für den Isolierkörper verwandte Isoliermaterial auch erhöhten dielektrischen Belastungen ausgesetzt, so dass bei erhöhten Spannungen eine Gefahr des Entstehens von Teilentladungen innerhalb des Isolierwerkstoffes des Isolierkörpers besteht. Derartige Teilentladungen können zu einer elektrischen sowie mechanischen Schwächung eines Isolierkörpers führen.

Aus der US Patentschrift US 2,320,093 ist bekannt, mehrere Isolierkörper zu verwenden, die unter Nutzung eines Spannbandes zusammengezogen werden, wobei ein zentraler Isolierkörper genutzt ist. Die Leiterabschnitte sind jeweils zwischen zwei benachbarten Zweigen des zentralen Isolierkörpers positioniert. Die strahlenförmig fortlaufenden Zweige werden mit Querkräften beaufschlagt. Aus den Veröffentlichungen JP 57-129115 sowie JP 62-40008 sowie DE 31 19 915 A1 sind jeweils Isolierkörper bekannt, welche mehrere Leiterabschnitte elektrisch isoliert zueinander positionieren. Den dort beschriebenen Isolierkörpern ist gemein, dass jeder der Leiterabschnitte, vollständig von Isoliermaterial umgriffen, den jeweiligen Isolierkörper durchsetzend angeordnet ist. Bevorzugt sind im Bereich des Durchsatzes der Leiterabschnitte Angüsse ausgeformt, welche einer Vergrößerung der Haltefestigkeit der Leiterabschnitte dienen.

Damit ergibt sich als Aufgabe der Erfindung einen Sammelschienenabschnitt anzugeben, welcher hinsichtlich mechani scher sowie dielektrischer Festigkeit verbesserte Eigenschaften aufweist.

Bei einem gasisolierten Sammelschienenabschnitt der eingangs genannten Art wird dies erfindungsgemäß dadurch gelöst, dass der Isolierkörper eine in sich geschlossen umlaufende ringförmige Kontur aufweist, die Leiterabschnitte an einem äußeren Umfang des Isolierkörpers verteilt an seiner Mantelfläche angeordnet sind und die Leiterabschnitte jeweils Anlagezonen für den Isolierkörper aufweisen, wobei die Anlagezonen in axialer Richtung durch Schultern der Leiterabschnitte begrenzt sind.

Mehrpolig gasisolierte Sammelschienenabschnitte sind beispielsweise Teile von Elektroenergieübertragungseinrichtungen, die über die voneinander elektrisch isoliert angeordneten Leiterabschnitte elektrische Energie übertragen. Die Leiterabschnitte dienen dabei als Strompfade. Vorzugsweise können die Leiterabschnitte zu einem mehrphasigen Elektroenergieübertragungssystem gehören und verschiedene elektrische Potentiale führen. Beispielsweise können die Leiterabschnitte der Übertragung eines mehrphasigen Wechselspannungssystems dienen. Ein mehrpolig gasisolierter Sammelschienenabschnitt weist ein Isoliergas auf, welches einer Isolation der verschiedenen Leiterabschnitte untereinander dient, das heißt, es liegt ein gemeinsames Isoliergasvolumen vor, um mehrere Leiterabschnitte voneinander elektrisch zu isolieren.

Vorzugsweise kann eine Gasisolation ein elektrisch isolierendes Isoliergas aufweisen, welches bezüglich atmosphärischem Druck unter erhöhtem Druck steht. Ein derartiges Isoliergas kann beispielsweise atmosphärische Luft, Stickstoff, Schwefelhexaflorid oder andere geeignete elektrisch isolierende Gase oder Gasgemische umfassen. Um ein Verflüchtigen des Isoliergases beziehungsweise eine Druckerhöhung des Isoliergases zu erzielen, können die Leiterabschnitte innerhalb eines Kapselungsgehäuses angeordnet sein, wobei das Kapselungsgehäuse eine fluiddichte Barriere um die elektrisch isoliert angeordneten Leiterabschnitte ausbildet. Das Kapselungsgehäuse kann beispielsweise einen elektrisch leitenden Körper aufweisen, welcher beispielsweise Erdpotential führt.

Eine elektrisch isolierte Positionierung der Leiterabschnitte relativ zueinander wird mittels des Isolierkörpers realisiert. Die Leiterabschnitte sind am äußeren Umfang, das heißt, an einer Mantelfläche des Isolierkörpers verteilt angeordnet. Die Leiterabschnitte können dabei in unmittelbaren Kontakt mit dem Isolierkörper stehen. Der Isolierkörper kann jedoch auch mit Armaturen, wie Feldsteuerelementen, versehen sein, an welchen die Leiterabschnitte jeweils anliegen. Zwischen dem Isolierkörper und den Leiterabschnitten liegt jeweils ein winkelstarrer Verbund vor. Die Leiterabschnitte erstrecken sich in Richtung der Hauptachse, d. h., deren räumliche Ausdehnung in Richtung der Hauptachse ist größer als deren räumliche Ausdehnung quer zur Hauptachse. Bei einem im Wesentlichen quer zur Hauptachse ausgerichteten Isolierkörper ist dessen Ausdehnung quer zur Hauptachse größer, als dessen Ausdehnung in Richtung der Hauptachse.

Eine in sich geschlossen ringförmige Kontur gestattet es Kräfte, die auf den Isolierkörper wirken, in in sich geschlossenen Bahnen innerhalb des Isolierkörpers zu kanalisieren. So ist es beispielsweise möglich, dass Umbruchkräfte, welche in einem Kurzschlussfall von einem oder mehreren der Leiterabschnitte ausgehen in die Ringstruktur eingeleitet werden. Somit ist ein Ausknicken beziehungsweise Verformen des Isolierkörpers unwahrscheinlich. Eine ringförmige Kontur ist beispielsweise durch eine Toroidform oder andere Rotationskörper gegeben. Weiterhin ist durch die Ringstruktur in einem mittigen Bereich eine durchgreifende Ausnehmung an dem Isolierkörper gebildet, welcher frei von elektrisch isolierendem Feststoff gehalten ist. Damit wird die Masse des Isolierkörpers und damit das benötigte Volumen an elektrisch isolierendem Feststoff reduziert. Trotz dieser Massereduzierung beziehungsweise Volumenreduzierung an elektrisch isolierendem Feststoff kann durch die ringförmige Struktur ein verwindungssteifer Isolierkörper zur Verfügung gestellt werden. Mit erhöhter Verwindungssteifigkeit kann an einem mehrpolig gasisolierten Sammelschienenabschnitt die Stützweite in Richtung der Hauptachse zwischen Punkten, an welchen die Sammelschienenabschnitte untereinander durch Isolierkörper fixiert werden, vergrößert werden. Weiterhin wird aufgrund der reduzierten Menge an isolierendem Feststoff die Masse des Verbundes aus mehreren elektrisch isoliert angeordneten Leiterabschnitten und Isolierkörpern reduziert. Bei reduzierter Masse wird die mechanische Stabilität des Verbundes aus Isolierkörper und Leiterabschnitten jedoch nicht wesentlich verändert.

Ein weiterer Vorteil der Ringstruktur ist dahingehend zu sehen, dass ein Zwickelbereich, das heißt, der Bereich in welchem sich elektrische Felder, welche die elektrischen Leiterabschnitte umgeben, überlagern und ggf. zu erhöhten dielektrischen Beanspruchungen führen, durch ein elektrisch isolierendes Isoliergas befüllt werden kann. Somit ist in diesem Zwickelbereich bei Verwendung eines Gases mit hoher Durchschlagfestigkeit eine hohe dielektrische Stabilität an dem mehrpolig gasisolierten Sammelschienenabschnitt gegeben. Selbst bei einem Durchschlag oder einer Teilentladung innerhalb des Zwickelbereiches, welcher vorteilhaft von der Hauptachse des Sammelschienenabschnittes durchstoßen ist, erfolgt eine Entladung innerhalb eines elektrisch isolierenden Isoliergases. Isoliergase sind selbstregenerierend, das heißt, entstehende Durchschlagskanäle oder Entladungszonen werden nach einem Abklingen unmittelbar mit Isoliergas verfüllt, so dass eine vollständige Wiederherstellung des Isoliervermögens erfolgt.

Weiterhin weist eine ringförmige Struktur den Vorteil auf, dass Konturen in leichter Weise gebrochen und gerundet werden können, so dass bereits aufgrund der ringförmigen Kontur des Isolierkörpers hervorstehende Spitzen und Kanten von elektrisch isolierendem Material des Isolierkörpers verhindert sind. Somit ist auch verhindert, dass an dem Isolierkörper Entladungserscheinungen an vorspringenden Spitzen und Kanten induziert werden. Eine Wandung eines Isolierkörpers kann verschiedenartig ausgeführt sein. So können beispielsweise Wandungen mit kreisförmigem, rechteckigem, ovalem, mehreckigem oder beliebig polygonal ausgeführtem Querschnitt Verwendung finden. Vorteilhaft sollten Ecken gerundet gebrochen sein.

Eine Verteilung und Befestigung der Leiterabschnitte am äußeren Umfang bewirkt eine günstige Beabstandung der Leiter untereinander, das heißt, eine Potentialtrennung kann sowohl beabstandet zur Oberfläche des Isolierkörpers, das heißt, innerhalb der Gasisolation zwischen den Leiterabschnitten erfolgen und weiterhin kann der Isolierstoff des Isolierkörpers eine ausreichende elektrisch isolierende Strecke im elektrisch isolierenden Feststoff des Isolierkörpers zur Verfügung stellen. Über den Isolierstoff kann so zum einen eine mechanische Halterung und Positionierung der Leiterabschnitte realisiert werden und zum anderen kann eine elektrische Isolation der Leiterabschnitte untereinander sichergestellt werden. Als Isolierstoff für einen Isolierkörper eignen sich beispielsweise Harze wie Epoxydharze, welche beispielsweise durch Gussverfahren in eine winkelstarre Form gebracht werden. Auch hinsichtlich der Fertigung im Gussverfahren ergeben sich durch eine Ringstruktur des Isolierkörpers Vorteile, da einfache Gussformen Verwendung finden können. So genannte Gusskokillen können aus einer geringen Anzahl von Teilgruppen zusammengesetzt werden, da Hinterschneidungen oder Hintergreifungen an einer ringförmig umlaufenden Kontur nur in geringem Maße oder überhaupt nicht vorhanden sind.

Eine Anordnung der Leiterabschnitte auf einer Mantelfläche des Isolierkörpers aufsitzend hat weiterhin den Vorteil, dass Ausnehmungen, wie sie beispielsweise bei einem Durchsetzen des Isolierkörpers mit elektrischen Leiterabschnitten vorzusehen wären, nicht notwendig sind. Des Weiteren können Positionen der Leiterabschnitte auf der Mantelfläche relativ variabel gewählt werden. So ist es beispielsweise möglich, dass eine symmetrische Verteilung der Leiterabschnitte am Umfang des Isolierkörpers vorgenommen wird. Es kann jedoch auch vorgesehen sein, dass abweichend eine asymmetrische Verteilung vorzunehmen ist. Aufgrund der ringförmigen Kontur, die in sich geschlossen ist, kann eine Verteilung der Anschlagpunkte der Leiterabschnitte am äußeren Umfang variabel gewählt werden, ohne dabei die Struktur des Isolierkörpers selbst verändern zu müssen. Somit kann mit ein und derselben Grundform eines Isolierkörpers ein mehrpolig gasisolierter Sammelschienenabschnitt in variabler Weise ausgeführt werden.

Es kann dabei vorgesehen sein, dass die Leiterabschnitte unmittelbar auf der Oberfläche des Isolierkörpers aufliegen. Es kann jedoch auch vorgesehen sein, dass unter Zwischenlage von elektrisch isolierenden oder elektrisch leitfähigen Körpern, wie Armaturkörpern, eine Beabstandung der Sammelschienenabschnitte unter Vermeidung einer unmittelbaren Kontaktierung mit dem elektrisch isolierenden Feststoff des Isolierkörpers erfolgt. So ist es beispielsweise möglich, Auflageringe aus elektrisch leitendem Material zu verwenden, welche zwischen dem Isolierkörper und einer Auflagefläche eines Leiterabschnitts zu positionieren wären. Derartige Auflageringe können darüber hinaus auch feldsteuernde Wirkung entfalten, indem diese beispielsweise eine elektrisch leitfähige Oberfläche aufweisen. Die Auflageringe können Teil eines in den Isolierkörper eingelassenen Armaturkörpers sein.

Eine weitere vorteilhafte Ausgestaltung kann vorsehen, dass der Isolierkörper eine hohlzylindrische Kontur aufweist.

Eine hohlzylindrische Kontur weist beliebig geformte Deckflächen auf, welche beabstandet längs einer Hauptachse angeordnet sind und über eine äußere Mantelfläche und eine innere Mantelfläche miteinander verbunden einen Körper ausbilden. Als solches stellt eine hohlzylindrische Kontur ebenfalls eine Ringform dar, wobei die Ringform im Bereich der Deckflächen vorzugsweise ebene Bereiche aufweist. Die Deckflächen können jedoch auch konkav oder konvex gewölbte Abschnitte aufweisen. Darüber hinaus sind auch andere Formgebungen, wie beispielsweise konkave oder konvexe pyramiden- oder kegelförmige Ausformungen der Deckflächen möglich. Dabei sollte im Interesse einer dielektrischen Festigkeit der Übergang zwischen Deckfläche und Mantelfläche in einer abgerundet gebrochenen Art vorgenommen werden, so dass an dem Isolierkörper keine scharfkantigen Schultern entstehen.

Weiterhin kann vorteilhaft vorgesehen sein, dass Deckflächen des Isolierkörpers stirnseitig angeordnet sind und jeweils einen Deckflächenquerschnitt und einen innerhalb des Deckflächenquerschnitts liegende Ausnehmung aufweisen, wobei die Ausnehmung und der Deckflächenquerschnitt voneinander abweichende geometrische Formgebungen aufweisen.

Unterschiedliche geometrische Formergebungen des Deckflächenquerschnitts und der Ausnehmungen führen dazu, dass die Wandstärke der ringförmigen beziehungsweise hohlzylindrischen Struktur des Isolierkörpers im Verlauf eines Umlaufes um die Hauptachse variiert. Somit sind an dem Isolierkörper Wandungen geringerer und stärkerer Dimension vorgesehen. So ist es beispielsweise möglich, den im Inneren des Isolierkörpers befindlichen dielektrischen belastbaren Zwickelbereich, welcher von Isoliergas durchsetzt ist, möglichst weiträumig auszulegen. Weiterhin können Abschnitte an dem Isolierkörper verstärkt ausgebildet werden, an welchen das Auftreten von erhöhten Kräften während eines Kurzschlusses zu erwarten ist. So können beispielsweise die Bereiche, an welchen die Leiterabschnitte auf der äußeren Mantelfläche des Isolierkörpers aufsitzen, eine verstärkte Wandung aufweisen, um ein möglichst großvolumiges, breitflächiges Einspeisen von Kräften in die ringförmige Struktur des Isolierkörpers zu ermöglichen. Die zwischen Bereichen zur Aufnahme der Leiterabschnitte liegenden Abschnitte können demgegenüber querschnittsreduziert sein.

Vorteilhafterweise sollte dabei vorgesehen sein, dass die beiderseits am stirnseitigen Ende befindlichen Deckflächen des Isolierkörpers gleichartig ausgeführt sind. Vorteilhafterweise sollte es sich bei dem Isolierkörper um einen geraden Körper handeln. Es kann jedoch auch davon abweichend vorgesehen sein, dass sowohl Deckflächen als auch die in den Deckflächen liegenden Ausnehmungen an den stirnseitigen Enden des Hohlzylinders verschiedenartige Formgebungen aufweisen, so dass im Verlauf der Hauptachse des Hohlzylinders ein kontinuierlicher Übergang mit entsprechender Varianz der Wandstärke des Isolierkörpers erfolgt. Dies ist beispielsweise dann vorteilhaft, wenn in dem gasisolierten Sammelschienenabschnitt eine bestimmte Strömung des Isoliergases hervorgerufen werden soll, so dass bestimmte Richtwirkungen auf das Isoliergas mittels einer Formgebung des Isolierkörpers unterstützt werden können.

Weiterhin kann vorteilhaft vorgesehen sein, dass der Isolierkörper am äußeren Umfang Abplattungen aufweist, in welche Feldsteuerelektroden eingebettet sind.

Durch ein Vorsehen von entsprechenden Abplattungen in der äußeren Mantelfläche sind an dem Isolierkörper bevorzugt zu verwendende Anlagebereiche definiert. Somit ergibt sich ein vereinfachtes Montieren der Leiterabschnitte auf dem Isolierkörper, da durch die Abplattungen eine grobe Festlegung der Leiterabschnitte an seinem Umfang vorgegeben ist. Durch die Abplattungen können beispielsweise auch entsprechende Formgebungen der Deckfläche unterstützt werden. So können die Abplattungen beispielsweise in linear gestreckte Körperkanten übergehen, welche abgerundet sind und einen Übergang zu einer Deckfläche darstellen.

Die Abplattungen sind ebene Abschnitte beispielsweise im Mantelbereich eines beispielsweise eine hohlzylindrische Kontur aufweisenden Isolierkörpers. Die Feldsteuerelektroden können dabei bündig in die Oberfläche des Isolierkörpers eingelassen sein, d.h. ein Verbund zwischen Isolierkörper und Feldsteuerelektrode sollte möglicht spaltfrei erfolgen. Dabei kann jedoch vorgesehen sein, dass die Feldsteuerelektrode Anformungen aufweist, welche sich aus der sie einbettenden Fläche des Isolierkörpers erheben. Derartige Anformungen können beispielsweise ringförmige Vorsprünge sein, welche als Auflageringe einer Anlage eines Leiterabschnittes an der Feldsteuerelektrode dienen. Damit kann ein definierter Abstand zwischen einer die Feldsteuerelektrode umgebenden Fläche des Isolierkörpers respektive einer bündig eingebetteten Fläche der Feldsteuerelektrode und dem anliegenden Leiterabschnitt sichergestellt werden, wobei ein definiert gebildeter Spalt mit Isoliergas durchflutet ist. Dadurch ist sichergestellt, dass keine Abschnitte entstehen, welche nur erschwert von dem Isoliergas befüllt werden können, so dass der Isolierkörper in ausreichender Weise von Isoliergas umspült ist.

Eine vorteilhafte Ausgestaltung kann vorsehen, dass der Isolierkörper sechseckige Deckflächen aufweist, deren Ecken abgerundet sind.

Eine sechseckige Deckfläche ist vorteilhaft einsetzbar, um am äußeren Umfang in einer Mantelfläche des Isolierkörpers stumpfe Kanten entstehen zu lassen, welche zusätzlich abgerundet sind. Weiterhin ist aufgrund der sechseckigen Deckflächen eine Anordnung beispielsweise von drei Leiterabschnitten möglich, wobei diese an zwischen den Kanten der Mantelfläche befindlichen Mantelflächenbereichen wechselweise überspringend gleichmäßig am Umfang verteilt angeordnet werden können.

Eine alternative Ausgestaltung kann vorsehen, dass der Isolierkörper dreieckige Deckflächen aufweist, deren Ecken abgerundet sind.

Dreieckige Deckflächen ermöglichen die Ausgestaltung eines Isolierkörpers mit hohlzylindrischer Kontur, wobei dieser an seinem Umfang drei Abplattungen aufweist, wobei jede der Abplattungen der Aufnahme jeweils eines Leiterabschnittes dienen kann. Somit können die Abplattungen verbindende Mantelflächenbereiche, d.h. die Eckpunkte eines Dreiecks, abgerundet werden. Vorteilhafterweise können die Abrundungen derart gewählt werden, dass die jeweiligen Bögen der gerundeten Ecken der Deckflächen bezüglich der Hauptachse auf ein und derselben Umfangsbahn liegen, wobei der Mittelpunkt dieser Umfangsbahn von der Hauptachse der mehrpolig gasisolierten Sammelschienenabschnittes durchsetzt ist.

Weiterhin ist erfindungsgemäß vorgesehen, dass die Leiterabschnitte jeweils Anlagezonen für den Isolierkörper aufweisen, wobei die Anlagezonen in axialer Richtung durch Schultern der Leiterabschnitte begrenzt sind.

Die Leiterabschnitte können vorteilhafterweise als Hohlprofile ausgestaltet sein. Geeignete Hohlprofile sind beispielsweise rohrförmige Leiterabschnitte mit kreisringförmigem Querschnitt. Durch das Einarbeiten von Anlagezonen in einem Leiterabschnitt ist eine Position definiert, an welcher in einfacher Weise ein Isolierkörper anzusetzen ist. Insbesondere bei der Verteilung mehrerer Isolierkörper entlang der Hauptachse an einem mehrpolig gasisolierten Sammelschienenabschnitt können diese in einfacher Weise längs der Leiterabschnitte positioniert werden. Vorspringende Schultern begrenzen dabei vorteilhafterweise die Anlagezonen, so dass ein Verschieben eines Isolierkörpers an dem Leiterabschnitt in axialer Richtung eingeschränkt ist. Somit kann selbst bei einer zunächst probeweise vorgenommenen Montage des mehrpolig gasisolierten Sammelschienenabschnittes in einfacher Weise eine Zuordnung der einzelnen Baugruppen zueinander erfolgen. Somit ist die Möglichkeit gegeben, die einzelnen Baugruppen eines mehrpolig gasisolierten Sammelschienenabschnittes zu nächst miteinander zu verbinden, wobei die Verbindung ein ausreichendes Spiel zulässt, um eine Justage vorzunehmen. Die vorspringenden Schultern unterstützen dabei die so zunächst nach Art einer Heftung miteinander verbundenen Baugruppen und verleihen eine zusätzliche Stabilität. Die Schultern können in die Wandungen der Leiterabschnitte derart eingebracht sein, dass deren Wandstärke reduziert wird, oder bei gleichbleibender Wandstärke erfolgt eine Abwandlung der Profilierung, so dass zu der jeweiligen Anlagezone benachbart eine abweichende Profilform im Verlauf eines Leiterzuges gegeben ist.

Dabei kann vorteilhaft vorgesehen sein, dass die Schultern jeweils eine nutartige Ausnehmung in den Leiterabschnitten begrenzen.

Nutartige Ausnehmungen in den Leiterabschnitten lassen ein Einlegen von gegengleichen Abschnitten, beispielsweise den Abplattungen am Umfang eines Isolierkörpers zu. In eine Nut kann der Isolierkörper geführt durch die Schultern eingeschoben werden. Nuten können beispielsweise durch eine Querschnittsreduzierung an einem Leiterabschnitt herbeigeführt werden. Insbesondere bei der Verwendung von Hohlkörpern für die Leiterabschnitte können entsprechende Umformungen zur Ausbildung einer Nut eingesetzt werden. So kann beispielsweise ein Rohr mit kreisringförmigem Querschnitt durch eine Umformung mit einer Nut versehen werden, so dass im Bereich der Nut beispielsweise ein halbkreisringförmiger Querschnitt des rohrförmigen Leiterabschnittes zur Verfügung gestellt ist.

Eine vorteilhafte Ausgestaltung kann vorsehen, dass die Anlagezonen jeweils von zumindest einer durchgreifenden Ausnehmung durchsetzt sind.

Eine durchgreifende Ausnehmung im Bereich der Anlagezone ermöglicht einen Leiterabschnitt beispielsweise mittels Gewindebolzen oder ähnlichen Befestigungsmitteln an einem Anlageabschnitt eines Isolierkörpers zu fixieren und einen winkelsteifen Verbund zwischen Leiterabschnitt und Isolierkörper zu bewirken. Über die Ausnehmung ist es beispielsweise möglich, Bolzenköpfe, Muttern oder ähnliches in den Leiterabschnitt hineinragen zu lassen und dort dielektrisch durch den Leiterabschnitt schirmen zu lassen. Damit kann auf zusätzliche Schirmungsbaugruppen für Befestigungsmittel verzichtet werden. So kann das Befestigungsmittel beispielsweise durch eine Feldsteuerelektrode einerseits sowie durch den Leiterabschnitt andererseits dielektrisch geschirmt werden. Die Feldsteuerelektrode kann dabei derart ausgestaltet sein, dass ein Befestigungsbolzen an der Feldsteuerelektrode festgelegt ist.

Eine weitere vorteilhafte Ausgestaltung kann vorsehen, dass die Leiterabschnitte als Hohlprofil ausgeformt sind, wobei eine gegenüber der durchgreifenden Ausnehmung querschnittsgrößere Ausnehmung in einem Wandungsabschnitt angeordnet ist, welcher dem eine Anlagezone aufweisenden Wandungsabschnitt fluchtend gegenüberliegt.

In einer hohlprofilartigen Ausgestaltung des Leiterabschnittes wird ein ausreichender Bauraum zur Verfügung gestellt, um innerhalb des Profils des Leiterabschnitts Befestigungsmittel anzuordnen. Wird nunmehr gegenüber der durchgreifenden Ausnehmung eine querschnittsgrößere Ausnehmung in einem Wandungsabschnitt des Hohlprofils des Leiterabschnitts angeordnet, so ist die Möglichkeit gegeben, über die querschnittsgrößere Ausnehmung eine Montage von Befestigungsmitteln für den Leiterabschnitt vorzusehen. Die querschnittsgrößere Ausnehmung eröffnet somit einen Montageraum, über welchen ein Zugang in das Innere des Hohlprofils gegeben ist. Eine Fluchtachse sollte in radialer Richtung zur Hauptachse verlaufen.

Die querschnittsgrößere Ausnehmung kann dabei gerundet gebrochene Kanten aufweisen, welche ins Innere des Hohlprofils hineinragend ausgeführt sind, so dass die querschnittsgrößere Ausnehmung dielektrisch selbstschirmend wirkt.

Eine weitere vorteilhafte Ausgestaltung kann vorsehen, dass in den Felsteuerelektroden Gewindebohrungen zum Festlegen der Leiterabschnitte angeordnet sind.

Ein Vorsehen einer Gewindebohrung in einer Feldsteuerelektrode ermöglicht es beispielsweise einen Gewindebolzen einerseits in einer Feldsteuerelektrode zu fixieren und diesen Gewindebolzen zu nutzen, um einen Leiterabschnitt an der Feldsteuerelektrode zu befestigen. Damit ist eine dielektrische Schirmung der Befestigungsmittel durch die Feldsteuerelektrode und durch den Leiterabschnitt möglich, wobei eine mechanisch belastbare Verbindung zwischen den beiden Bauteilen gegeben ist.

Eine weitere vorteilhafte Ausgestaltung kann vorsehen, dass mehrere Isolierkörper längs der Hauptachse gestaffelt angeordnet sind und die Isolierkörper sowie die Leiterabschnitte von einem die Hauptachse umgreifenden Kapselungsgehäuse umschlossen sind, bezüglich welchem eine Positionierung der Leiterabschnitte über stirnseitig am Kapselungsgehäuse angeordnete Scheibenisolatoren erfolgt.

Zur Ausbildung von Sammelschienenabschnitten, welche sich über längere Strecken in Richtung der Hauptachse erstrecken, können mehrere Isolierkörper an den Leiterabschnitten angeordnet sein. Durch den Einsatz mehrerer Isolierkörper werden die einzelnen Leiterabschnitte untereinander stabilisiert. Die Isolierkörper können jeweils gleichartig ausgeformt sein und fluchtend längs der Hauptachse beabstandet zueinander sein. Ein Verbund aus Leiterabschnitten und Isolierkörpern weist eine höhere Stabilität auf als die einzelnen Leiterabschnitte für sich genommen. Damit ist es möglich, den Verbund aus Leiterabschnitten und Isolierkörpern über größere Stützweiten verlaufen zu lassen. Damit ergibt sich die Möglichkeit, ein Kapselungsgehäuse, welches beispielsweise rohrförmig ausgebildet ist, in Richtung der Hauptachse zu verlängern und an den Endseiten mit so genannten Scheibenisolatoren auszustatten. Scheibenisolatoren stützen sich dabei stirnseitig an dem rohrförmigen Kapselungsgehäuse ab und erstrecken sich quer zur Längsachse des Kapselungsgehäuses. Dabei ist die Längsachse des Kapselungsgehäuses vorzugsweise koaxial beziehungsweise parallel zur Hauptachse angeordnet. Die Scheibenisolatoren stellen somit eine elektrisch isolierende mechanische Verbindung der Leiterabschnitte zum Kapselungsgehäuse dar. Die Leiterabschnitte können entsprechend an den Scheibenisolatoren abgestützt sein, so dass diese elektrisch isoliert innerhalb des Kapselungsgehäuses angeordnet sind. Das Innere des Kapselungsgehäuses ist mit einem entsprechenden elektrisch isolierenden Isoliergas versehen. Die Leiterabschnitte können sich durch die Scheibenisolatoren hindurch erstrecken, um an ihren jeweils von der mehrpolig gasisolierten Sammelschienenabschnitt liegenden Seiten mit einem weiteren mehrpolig gasisolierten Sammelschienenabschnitt oder anderen Bauteilen wie Trennern, Leistungsschaltern, Erdungsschaltern usw. elektrisch kontaktiert zu werden. Es kann auch vorgesehen sein, dass Kontaktelemente in den Scheibenisolatoren eingearbeitet sind, mit welchen die Leitungsabschnitte jeweils verbunden sind. Über die Kontaktelemente ist eine elektrische Kontaktierung der Leiterabschnitte durch die Scheibenisolatoren hindurch ermöglicht.

Die Scheibenisolatoren können einen fluiddichten Abschluss des Kapselungsgehäuses darstellen, so dass das im Inneren des mehrpolig gasisolierten Sammelschienenabschnitts befindliche Isoliergas nicht entweichen kann. Vorteilhafterweise kann das im Inneren des Kapselungsgehäuses befindliche Isoliergas mit einem gegenüber der Umgebung erhöhten Druck beaufschlagt sein, wodurch die Isolationsfestigkeit des Isoliergases erhöht ist. Die Scheibenisolatoren können jedoch auch einen Kanal für ein Überströmen des Isoliergases aufweisen.

Ein Ausführungsbeispiel der Erfindung wird nachfolgend in einer Zeichnung schematisch dargestellt sowie nachfolgend beschrieben.

Dabei zeigt die
- Figur 1: einen mehrpolig gasisolierten Sammelschienenabschnitt, welcher teilweise freigeschnitten ist, die
- Figur 2: einen Querschnitt durch eine erste Variante eines mehrpolig gasisolierten Sammelschienenabschnitts und die
- Figur 3: ein Ausführungsbeispiel eines Isolierkörpers.

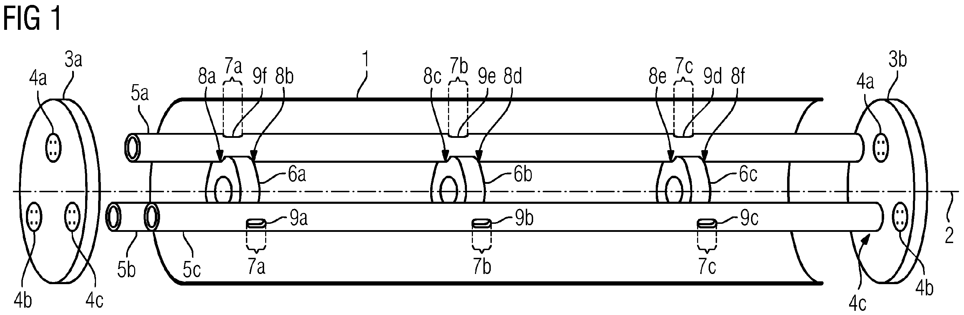

In der Figur 1 ist beispielhaft ein mehrpolig gasisolierter Sammelschienenabschnitt dargestellt. Dabei ist der mehrpolig gasisolierte Sammelschienenabschnitt teilweise freigeschnitten, um die einzelnen Baugruppen deutlicher erkennen zu können.

Der mehrpolig gasisolierte Sammelschienenabschnitt weist ein Kapselungsgehäuse 1 auf. Das Kapselungsgehäuse 1 ist rohrförmig ausgestaltet und weist einen im Wesentlichen kreisringförmigen Querschnitt auf. Das Kapselungsgehäuse 1 erstreckt sich koaxial zu einer Hauptachse 2. Das Kapselungsgehäuse 1 ist beispielsweise ein metallisches Kapselungsgehäuse, z.B. ein Kapselungsgehäuse aus Stahl oder aus Aluminiumguss. Das Kapselungsgehäuse 1 ist dabei fluiddicht ausgestaltet, wobei endseitig am Kapselungsgehäuse, die Stirnflächen des Kapselungsgehäuses 1 überspannend, jeweils ein Scheibenisolator 3a, 3b angeordnet ist. Die Scheibenisolatoren 3a, 3b weisen eine gleichartige Konstruktion auf. Beispielsweise können die Scheibenisolatoren 3a, 3b als Isolator jeweils einen Gießharzisolierkörper aufweisen, in welche die Scheibenisolatoren 3a, 3b in Richtung der Hauptachse 2 durchsetzende Kontaktelemente 4a, 4b, 4c eingesetzt sind. Die Kontaktelemente 4a, 4b, 4c sind fluiddicht mit dem Isolierwerkstoff des Scheibenisolators 3a, 3b verbunden und ermöglichen eine Hindurchleitung eines elektrischen Stromes durch den jeweiligen Scheibenisolator 3a, 3b, wobei die Kontaktelemente 4a, 4b, 4c durch den Scheibenisolator 3a, 3b elektrisch isoliert relativ zueinander positioniert sind. Am äußeren Umfang ist der Scheibenisolator 3a, 3b derart ausgestaltet, dass er fluiddicht auf einer ringförmigen Fläche des Kapselungsgehäuses 1 aufliegt und das Kapselungsgehäuse 1 verschließt. Dazu kann beispielsweise vorgesehen sein, dass das Kapselungsgehäuse 1 stirnseitig mit entsprechenden Flanschanordnungen ausgestattet ist. Neben einem fluiddichten Verschließen des Kapselungsgehäuses 1 mittels der Scheibenisolatoren 3a, 3b kann auch vorgesehen sein, dass die Scheibenisolatoren 3a, 3b beispielsweise Ausnehmungen aufweisen, durch welche ein Fluid aus dem Inneren des Kapselungsgehäuses 1 durch einen Scheibenisolator 3a, 3b in ein angrenzendes Kapselungsgehäuse 1 überströmen oder allgemein ausströmen kann.

Die Kontaktelemente 4a, 4b, 4c der beiden Scheibenisolatoren 3a, 3b sind symmetrisch verteilt um die Hauptachse 2, welche durch die Scheibenisolatoren 3a, 3b läuft, angeordnet. Der radiale Abstand zu der Hauptachse 2 jedes der drei Kontaktelemente 4a, 4b, 4c ist gleich groß. Somit bilden die Kontaktelemente 4a, 4b, 4c in der Fläche der Scheibenisolatoren 3a, 3b in Richtung der Hauptachse jeweils die Eckpunkte eines gleichseitigen Dreiecks. Die Kontaktelemente 4a, 4b, 4c sind dabei derart ausgestaltet, dass ein winkelstarrer Verbund eines Kontaktelementes 4a, 4b, 4c mit einem zugeordneten Leiterabschnitt 5a, 5b, 5c erfolgen kann. Dazu können in den Kontaktelementen 4a, 4b, 4c beispielsweise Gewindebohrungen vorgesehen sein, die ein Verschrauben von Leiterabschnitten 5a, 5b, 5c entweder direkt oder unter Nutzung entsprechender Armaturkörper gestatten.

Vorliegend sind drei Leiterabschnitte 5a, 5b, 5c von dem Kapselungsgehäuse 1 umgeben. Die drei Leiterabschnitte 5a, 5b, 5c weisen dabei jeweils eine hohlprofilartige Gestaltung auf, wobei der dominierende Querschnitt im Verlauf der Leiterabschnitte 5a, 5b, 5c ein kreisringförmiger Querschnitt ist. Der kreisringförmige Querschnitt ist in der Figur 1 an den freien Stirnseiten symbolisiert dargestellt. Die Leiterabschnitte 5a, 5b, 5c sind mit den jeweils zugeordneten Kontaktelementen 4a, 4b, 4c der beiden Scheibenisolatoren 3a, 3b jeweils elektrisch leitend mit diesen kontaktiert und an diesen abgestützt. Somit kann auch bei einem Verschluss des Kapselungsgehäuses 1 mittels der Scheibenisolatoren 3a, 3b ein elektrischer Strom über die Kontaktelemente 4a, 4b, 4c in die Leiterabschnitte 5a, 5b, 5c des mehrpolig gasisolierten Sammelschienenabschnitts eingespeist werden. Weiterhin können über die Scheibenisolatoren 3a, 3b, welche stirnseitig an dem Kapselungsgehäuse 1 angeordnet sind, die Leiterabschnitte 5a, 5b, 5c relativ zum Kapselungsgehäuse 1 positioniert werden.

Um ein Durchhängen oder Verwinden der Leiterabschnitte 5a, 5b, 5c zu verhindern, ist im Verlauf der Hauptachse 2 die Anordnung mehrerer Isolierkörper 6a, 6b, 6c vorgesehen. Die Isolierkörper 6a, 6b, 6c weisen in dem Ausführungsbeispiel gemäß Figur 1 eine in sich geschlossene ringförmige Kontur auf.

Die ringförmige Kontur läuft dabei um eine Ringachse um, wobei die Ringachse parallel insbesondere koaxial zur Hauptachse 2 des Kapselungsgehäuses 1 ausgerichtet ist. Die Leiterabschnitte 5a, 5b, 5c sind winkelstarr mit den Isolierkörpern 6a, 6b, 6c verbunden, so dass die Leiterabschnitte 5a, 5b, 5c einander stützen und versteifen. Eine Wandung des Isolierkörpers 6a, 6b, 6c weist hier einen rechteckigen Querschnitt auf, wobei Körperkanten gerundet gebrochen sind. Es sind jedoch auch weitere Querschnitte wie kreisförmig, oval, vieleckig etc. zur Ausbildung eines Isolierkörpers 6a, 6b, 6c verwendbar.

Die Positionen der Isolierkörper 6a, 6b, 6c sind an den Leiterabschnitten 5a, 5b, 5c derart festgelegt, dass in den Leiterabschnitten 5a, 5b, 5c Anlagezonen 7a, 7b, 7c durch in axialer Richtung eine Verschiebbarkeit der Isolierkörper 6a, 6b, 6c begrenzende vorspringe Schultern 8a, 8b, 8c, 8d, 8e, 8f definiert sind. Dabei sind die Leiterabschnitte 5a, 5b, 5c jeweils gleichartig ausgeformt. In den Anlagezonen 7a, 7b, 7c radial gegenüberliegenden Bereichen der Oberflächen der Leiterabschnitte 5a, 5b, 5c sind querschnittsgrößere Ausnehmungen 9a, 9b, 9c, 9d, 9e, 9f eingebracht. Über die querschnittsgrößeren Ausnehmungen 9a, 9b, 9c, 9d, 9e, 9f ist ein Zugang in das Innere der hohlprofilartigen Leiterabschnitte 5a, 5b, 5c ermöglicht. Über die querschnittsgrößeren Ausnehmungen 9a, 9b, 9c, 9d, 9e, 9f kann eine Befestigung der Isolierkörper 6a, 6b, 6c an den Leiterabschnitten 5a, 5b, 5c vorgenommen werden. So ist es beispielsweise möglich, Gewindebolzen über die querschnittsgrößeren Ausnehmungen 9a, 9b, 9c, 9d, 9e, 9f einzuführen oder Werkzeuge für eine Montage in die Leiterabschnitte 5a, 5b, 5c einzuführen. Die querschnittsgrößeren Ausnehmungen 9a, 9b, 9c, 9d, 9e, 9f können durch ein Stanzen von Mantelflächen der Leiterabschnitte 5a, 5b, 5c eingebracht werden, wobei Stanzgrate nach Innen in den Hohlraum der Leiterabschnitte 5a, 5b, 5c hineinragen, so dass die im äußeren Mantelflächenbereich der Leiterabschnitte 5a, 5b, 5c liegenden Körperkanten der querschnittsgrößeren Ausnehmungen 9a, 9b, 9c, 9d, 9e, 9f abgerundet sind. Stanzrückstände wie Grate sind im Inneren des Hohlprofils dielektrisch geschirmt angeordnet.

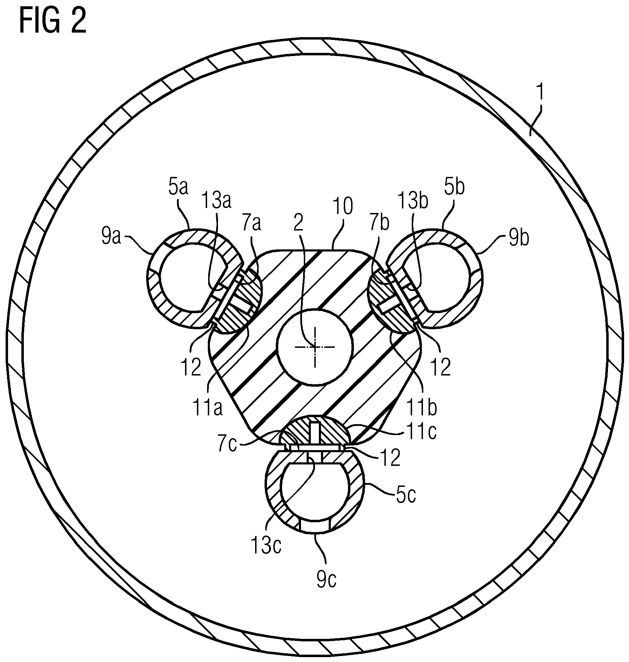

Die Figur 2 zeigt einen Querschnitt durch einen mehrpolig gasisolierten Sammelschienenabschnitt in einer ersten Variante. Zu Erkennen ist das Kapselungsgehäuse 1 mit seinem kreisringförmigen Querschnitt sowie die Hauptachse 2. Weiterhin sind die aus der Figur 1 bekannten Leiterabschnitte 5a, 5b, 5c erkennbar, wobei diese an einem alternativ ausgestalteten Isolierkörper 10 positioniert sind. Die Leiterabschnitte 5a, 5b, 5c sind in ihren jeweiligen Anlagezonen geschnitten, so dass aufgrund einer nutartigen Ausgestaltung das kreisringförmige Profil hier zu einem kreissegmentförmigen Profil eingeengt ist. Die vorspringenden Schultern überragen einen zwischen der Anlagezone des jeweiligen Leiterabschnittes 5a, 5b, 5c und der jeweils zugeordneten Feldsteuerelektrode 11 gebildeten Spalt. Die Schultern begrenzen ein Verschieben des Isolierkörpers 10 in Richtung der Hauptachse 2.

Der Isolierkörper 10 in alternativer Ausgestaltung weist eine hohlzylindrische Formgebung auf, wobei die Deckflächen einen sechseckigen Deckflächenquerschnitt aufweisen. Ecken des Deckflächenquerschnittes sind abgerundet gebrochen ausgeführt. Der sechseckige Deckflächenquerschnitt ist symmetrisch zur Hauptachse 2 ausgerichtet. In dem Deckflächenquerschnitt ist eine kreisförmige Ausnehmung angeordnet, so dass eine hohlzylindrische Kontur für den Isolierkörper 10 in alternativer Ausgestaltung gebildet ist. Die aufgrund der sechseckigen Formgebung des Deckflächenquerschnitts in der Mantelfläche des hohlzylindrischen Isolierkörpers befindlichen Mantelflächenkanten sind gerundet gebrochen ausgestaltet. In den sich zwischen den Mantelflächenkanten erstreckenden (abgeplatteten) Abschnitten der Mantelfläche des hohlzylindrischen Isolierkörpers 10 sind Feldsteuerelektroden 11a, 11b, 11c eingelassen. Die Feldsteuerelektroden 11a, 11b, 11c sind kugelsegmentförmig ausgeformt, wobei eine kreisförmige Aufnahmefläche der jeweiligen Feldsteuerelektrode 11a, 11b, 11c bündig annähernd spaltfrei in die äußere Mantelfläche des Isolierkörpers 10 mit hohlzylindrischer Kontur eingelassen ist. Zentrisch in den Feldsteuerelektroden 11a, 11b, 11c ist jeweils eine Gewindebohrung angeordnet, mittels welcher unter Nutzung von Gewindebolzen die Leiterabschnitte 5a, 5b, 5c gegen die Feldsteuerelektroden 11a, 11b, 11c und damit mit dem Isolierkörper 10 in alternativer Ausgestaltung verspannt sind. Koaxial zu den jeweiligen Gewindebohrungen in den jeweiligen Feldsteuerelektroden 11a, 11b, 11c ist in der bündig in dem Isolierkörper 10 befindlichen Fläche eine vorspringende Ringschulter 12 (Anlagering) angeordnet. Über die vorspringende Ringschulter 12 ist ein definierter Abstand zwischen den anliegenden Leiterabschnitten 5a, 5b, 5c sowie dem Isolierkörper 10 respektive den Feldsteuerelektroden 11a, 11b, 11c gegeben. Der so definiert eingerichtete Spalt kann von elektrisch isolierendem Isoliergas leicht durchflutet werden, so dass Unstetigkeiten in der Isolation, die zu einer reduzierten Isolationsfestigkeit führen würden, an der mehrpolig gasisolierten Sammelschienenabschnitt verhindert sind.

Die Schnittebene der Figur 2 schneidet die aus Figur 1 bekannten Leiterabschnitte 5a, 5b, 5c jeweils in ihren Anlagezonen 7a, 7b, 7c. In der Perspektive der Figur 2 ist somit hinter den Ringschultern 12 jeweils eine die jeweilige Anlagezone 7a, 7b, 7c begrenzende vorspringende Schulter angeordnet. Die vorspringende Schulter begrenzt die jeweilige Anlagezone 7a, 7b, 7c und überragt den Isolierkörper 10 in radialer Richtung auf die Hauptachse 2 zulaufend. Damit ist ein Isolierkörper 10 nur in bestimmten Bereichen, nämlich in den Anlagezonen 7a, 7b, 7c, der Leiterabschnitte 5a, 5b, 5c, einlegbar. In der jeweiligen Anlagezone 7a, 7b, 7c ist eine Ausnehmung 13a, 13b, 13c befindlich. Die Ausnehmung 13a, 13b, 13c kann entsprechend von einem Gewindebolzen durchsetzt werden, welcher in einer Feldsteuerelektrode 11a, 11b, 11c im jeweiligen Gewindegang verspannt ist. Fluchtend gegenüberliegend ist die aus der Figur 1 bekannte querschnittsgrößere Ausnehmung 9a, 9b, 9c angeordnet. Die querschnittsgrößere Ausnehmung 9a, 9b, 9c ist dabei derart dimensioniert, dass beispielsweise Werkzeuge in das Innere des Hohlprofils der Leiterabschnitte 5a, 5b, 5c eingeführt werden können, um beispielsweise an einem Gewindebolzen befindliche Schraubenköpfe zu bewegen, um ein Verspannen der Leiterabschnitte 5a, 5b, 5c an dem Isolierkörper 10 in alternativer Ausgestaltung zu ermöglichen.

Das Innere des Kapselungsgehäuses 1 ist mit einem elektrisch isolierenden Fluid, vorzugsweise einem Isoliergas, befüllt. Dieses Fluid sollte dabei unter einem gegenüber der Umgebung erhöhten Druck stehen, wodurch die Isolationsfestigkeit des Fluids zusätzlich erhöht werden kann.

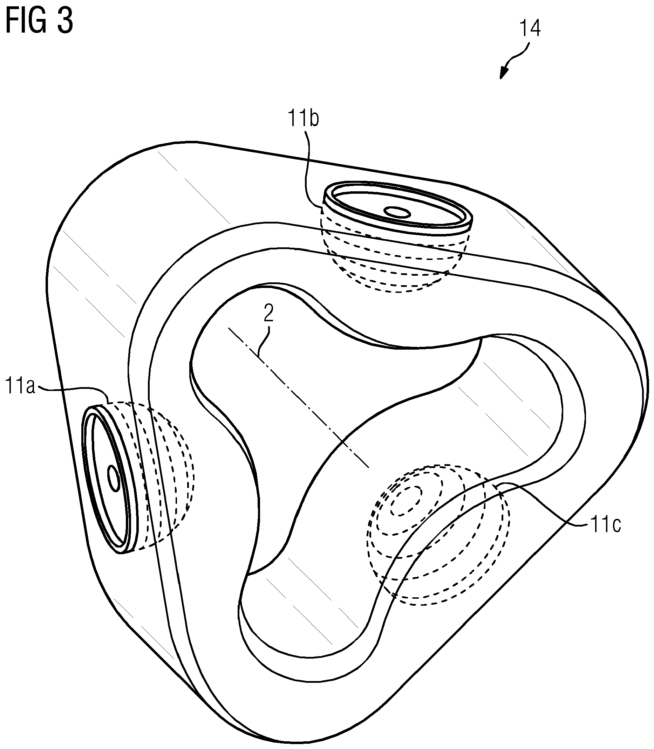

Die Figur 3 zeigt eine alternative Ausgestaltung eines Isolierkörpers 11.

Der in der Figur 3 gezeigte Isolierkörper 14 kann alternativ zu den in den Figuren 1 und 2 gezeigten Isolierkörpern Verwendung finden. Der Isolierkörper 14 weist dabei eine hohlzylindrische Kontur auf, wobei die Deckflächenquerschnitte, welche lotrecht zu der Hauptachse 2 liegen, einen im Wesentlichen dreieckigen Querschnitt aufweisen, wobei die Ecken der Dreiecke abgerundet sind. Eine Abrundung der Ecken erfolgt dabei derart, dass der Radius jeweils gleich gewählt ist und die Radien auf einer gemeinsamen Bewegungsbahn um die Hauptachse 2 herumlaufend angeordnet sind. Zwischen den drei Ecken sind in der Mantelfläche Abplattungen vorgesehen, wobei in die Abplattungen jeweils eine Feldsteuerelektrode 11a, 11b, 11c eingebettet ist. Die Feldsteuerelektroden 11a, 11b, 11c weisen auch hier eine kugelsegmentartige Struktur auf, wobei eine kreisrunde Schnittfläche bündig in den Abplattungen der äußeren Mantelfläche des Isolierkörpers 14 eingebettet ist.

Die Abplattungen sind dabei derart angeordnet, dass die linear gestreckten Körperkanten der Deckflächen abgerundet in die Abplattungen übergehen. Mit anderen Worten wären die Abplattungen mit den eingesetzten Feldsteuerelektroden 11a, 11b, 11c nicht als Abplattungen ausgeführt, sondern würde die Umfangsbahn der gerundeten Ecken weitergeführt, würde eine Deckfläche mit kreisförmigem Deckflächenquerschnitt entstehen. Die Abplattungen stellen dabei Sekanten in einem gedachten kreisförmigen Deckflächenquerschnitt dar.

Der in der Figur 3 gezeigte Deckflächenquerschnitt ist von einer Ausnehmung durchsetzt. Die Ausnehmung weist vorliegend eine sternförmige Struktur mit drei radial von der Hauptachse 2 fortragenden Sternarmen auf, wobei die Enden der Sternarme abgerundet ausgeführt sind. Eine Abrundung der Sternarme ist so ausgeführt, dass diese auf Eckpunkte des dreieckigen Deckflächenquerschnittes zulaufen. Die Rundung ist derart gewählt, dass der Verlauf der Körperkanten der Innenmantelfläche und Außenmantelfläche annähernd parallel ausgeführt ist. Die Wandungen in den Ecken des Isolierstoffkörpers 14 weisen so einen gleichbleibenden Querschnitt auf. Im Bereich der Abplattungen ist eine gewölbte Wandverstärkung der hohlzylindrischen Kontur des Isolierkörpers vorgesehen. Im Bereich der gewölbten Wandverstärkung sind die Feldsteuerelektroden 11a, 11b, 11c eingebettet. Somit ist es möglich, die Feldsteuerelektroden 11a, 11b, 11c in Richtung der Hauptachse 2 vollständig mit einer Isolierstoffschicht zu überdecken, um die Feldsteuerelektroden 11a, 11b, 11c winkelstarr in dem Isolierkörper 14 zu fixieren. Andererseits ist durch die strahlenförmige Ausdehnung, der in dem Deckflächenquerschnitt liegenden Ausnehmung, eine hohlzylindrische Kontur gebildet, die im Zwickelbereich des Isolierkörpers eines großes Volumen zur Verfügung stellt, um Isoliergas aufzunehmen. Insbesondere in Zwickelbereichen, d.h. in Bereichen, in welchen sich elektrische Felder der an den Feldsteuerelektroden 11a, 11b, 11c befindlichen Leiterabschnitte 5a, 5b, 5c überlagern, können Feldstärkeüberhöhungen auftreten. Derartige Feldstärkeüberhöhungen sind in vereinfachter Weise in einem fluiden Isoliermedium beherrschbar.

## Patentansprüche

1. Mehrpolig gasisolierter Sammelschienenabschnitt mit mehreren voneinander elektrisch isoliert angeordneten, sich im Wesentlichen längs einer Hauptachse (2) erstreckenden Leiterabschnitten (5a, 5b, 5c), welche mittels eines im Wesentlichen quer zur Hauptachse (2) ausgerichteten Isolierkörpers (6a,
6b, 6c, 10, 14), an welchem die Leiterabschnitte (5a, 5b, 5c) um die Hauptachse (2) umlaufend verteilt angeordnet sind, relativ zueinander in ihrer Lage festgelegt sind,
**dadurch gekennzeichnet, dass** der Isolierkörper (6a, 6b, 6c, 10, 14) eine in sich geschlossen umlaufende ringförmige Kontur aufweist, die Leiterabschnitte (5a, 5b, 5c) an einem äußeren Umfang des Isolierkörpers (6a, 6b, 6c, 10, 14) verteilt an seiner Mantelfläche angeordnet sind und die Leiterabschnitte (5a, 5b, 5c) jeweils Anlagezonen (7a, 7b, 7c) für den Isolierkörper aufweisen, wobei die Anlagezonen (7a, 7b, 7c) in axialer Richtung durch Schultern der Leiterabschnitte (5a, 5b, 5c) begrenzt sind.

2. Mehrpolig gasisolierter Sammelschienenabschnitt nach Anspruch 1,
**dadurch gekennzeichnet, dass**
der Isolierkörper (6a, 6b, 6c, 10, 14) eine hohlzylindrische Kontur aufweist.

3. Mehrpolig gasisolierter Sammelschienenabschnitt nach Abschnitt 1 oder 2,
**dadurch gekennzeichnet, dass**
Deckflächen des Isolierkörpers (6a, 6b, 6c, 10, 14) stirnseitig angeordnet sind und jeweils einen Deckflächenquerschnitt und einen innerhalb des Deckflächenquerschnitts liegende Ausnehmung aufweisen, wobei die Ausnehmung und der Deckflächenquerschnitt voneinander abweichende geometrische Formgebungen aufweisen.

4. Mehrpolig gasisolierter Sammelschienenabschnitt nach einem der Abschnitte 1 bis 3,
**dadurch gekennzeichnet, dass**
der Isolierkörper (6a, 6b, 6c, 10, 14) am äußeren Umfang Abplattungen aufweist, in welche Feldsteuerelektroden (11a, 11b, 11c) eingebettet sind.

5. Mehrpolig gasisolierter Sammelschienenabschnitt nach einem der Ansprüche 2 bis 4,
**dadurch gekennzeichnet, dass**
der Isolierkörper (6a, 6b, 6c, 10, 14) sechseckige Deckflächen aufweist, deren Ecken abgerundet sind.

6. Mehrpolig gasisolierter Sammelschienenabschnitt nach einem der Ansprüche 2 bis 5,
**dadurch gekennzeichnet, dass**
der Isolierkörper (6a, 6b, 6c, 10, 14) dreieckige Deckflächen aufweist, deren Ecken abgerundet sind.

7. Mehrpolig gasisolierter Sammelschienenabschnitt nach Anspruch 1 bis 6,
**dadurch gekennzeichnet, dass**
die Schultern jeweils eine nutartige Ausnehmung in den Leiterabschnitten (5a, 5b, 5c) begrenzen.

8. Mehrpolig gasisolierter Sammelschienenabschnitt nach Anspruch 1 bis 7,
**dadurch gekennzeichnet, dass**
die Anlagezonen (7a, 7b, 7c) jeweils von zumindest einer durchgreifenden Ausnehmung (13a, 13b, 13c) durchsetzt sind.

9. Mehrpolig gasisolierter Sammelschienenabschnitt nach Anspruch 8,
**dadurch gekennzeichnet, dass**
die Leiterabschnitte (5a, 5b, 5c) als Hohlprofil ausgeformt sind, wobei eine gegenüber der durchgreifenden Ausnehmung (13a, 13b, 13c) querschnittsgrößere Ausnehmung (9a, 9b, 9c, 9d, 9e, 9f) in einem Wandungsabschnitt angeordnet ist, welcher dem eine Anlagezone (7a, 7b, 7c) aufweisenden Wandungsabschnitt fluchtend gegenüberliegt.

10. Mehrpolig gasisolierter Sammelschienenabschnitt nach einem der Ansprüche 4 bis 9,
**dadurch gekennzeichnet, dass**
in den Felsteuerelektroden (11a, 11b, 11c) Gewindebohrungen zum Festlegen der Leiterabschnitte (5a, 5b, 5c) angeordnet sind.

11. Mehrpolig gasisolierter Sammelschienenabschnitt nach einem der Ansprüche 1 bis 10,
**dadurch gekennzeichnet, dass**
mehrere Isolierkörper (6a, 6b, 6c, 10, 14) längs der Hauptachse (2) gestaffelt angeordnet sind und die Isolierkörper (6a, 6b, 6c, 10, 14) sowie die Leiterabschnitte (5a, 5b, 5c) von einem die Hauptachse (2) umgreifenden Kapselungsgehäuse (1) umschlossen sind, bezüglich welchem eine Positionierung der Leiterabschnitte (5a, 5b, 5c) über stirnseitig am Kapselungsgehäuse (1) angeordnete Scheibenisolatoren (3a, 3b) erfolgt.

## Claims

1. Multipole-gas-insulated busbar section having a plurality of conductor sections (5a, 5b, 5c), which are arranged such that they are electrically isolated from one another, extend essentially along a main axis (2) and are fixed in their position relative to one another by means of an insulating body (6a, 6b, 6c, 10, 14) which is aligned essentially transversely with respect to the main axis (2) and on which the conductor sections (5a, 5b, 5c) are arranged distributed circumferentially around the main axis (2),
**characterized in that**
the insulating body (6a, 6b, 6c, 10, 14) has an intrinsically closed circumferential annular contour, the conductor sections (5a, 5b, 5c) are arranged on an external circumference of the insulating body (6a, 6b, 6c, 10, 14) distributed on its envelope surface and the conductor sections (5a, 5b, 5c) each have contact zones (7a, 7b, 7c) for the insulating body, with the contact zones (7a, 7b, 7c) being bounded in the axial direction by shoulders on the conductor sections (5a, 5b, 5c).

2. Multipole-gas-insulated busbar section according to Claim 1,
**characterized in that**
the insulating body (6a, 6b, 6c, 10, 14) has a hollow-cylindrical contour.

3. Multipole-gas-insulated busbar section according to Claim 1 or 2,
**characterized in that**
cover surfaces of the insulating body (6a, 6b, 6c, 10, 14) are arranged at the end and each have a cover surface cross section and a recess which is located within the cover surface cross section, with the recess and the cover surface cross section having geometrically different shapes from one another.

4. Multipole-gas-insulated busbar section according to one of Claims 1 to 3,
**characterized in that**
the insulating body (6a, 6b, 6c, 10, 14) has flats on the external circumference, in which flats field control electrodes (11a, 11b, 11c) are embedded.

5. Multipole-gas-insulated busbar section according to one of Claims 2 to 4,
**characterized in that**
the insulating body (6a, 6b, 6c, 10, 14) has hexagonal cover surfaces, whose corners are rounded.

6. Multipole-gas-insulated busbar section according to one of Claims 2 to 5,
**characterized in that**
the insulating body (6a, 6b, 6c, 10, 14) has triangular cover surfaces, whose corners are rounded.

7. Multipole-gas-insulated busbar section according to Claims 1 to 6,
**characterized in that**
the shoulders each bound a groove-like recess in the conductor sections (5a, 5b, 5c).

8. Multipole-gas-insulated busbar section according to Claims 1 to 7,
**characterized in that**
at least one recess (13a, 13b, 13c) which passes through passes through each of the contact zones (7a, 7b, 7c).

9. Multipole-gas-insulated busbar section according to Claim 8,
**characterized in that**
the conductor sections (5a, 5b, 5c) are in the form of a hollow profile, with a recess (9a, 9b, 9c, 9d, 9e, 9f) with a larger cross section than the recess (13a, 13b, 13c) which passes through being arranged in a wall section which is opposite and aligned with the wall section which has a contact zone (7a, 7b, 7c) .

10. Multipole-gas-insulated busbar section according to one of Claims 4 to 9,
**characterized in that**
threaded holes are arranged in the field control electrodes (11a, 11b, 11c) in order to fix the conductor sections (5a, 5b, 5c) .

11. Multipole-gas-insulated busbar section according to one of Claims 1 to 10,
**characterized in that**
a plurality of insulating bodies (6a, 6b, 6c, 10, 14) are arranged staggered along the main axis (2), and the insulating bodies (6a, 6b, 6c, 10, 14) and the conductor sections (5a, 5b, 5c) are surrounded by an encapsulating housing (1) which surrounds the main axis (2), with reference to which the conductor sections (5a, 5b, 5c) are positioned via disk-type insulators (3a, 3b) which are arranged at the end on the encapsulating housing (1).

## Revendications

1. Segment de barre omnibus multipolaire à isolation gazeuse, comprenant plusieurs tronçons (5a, 5b, 5c) conducteurs isolés électriquement les uns des autres, s'étendant sensiblement suivant un axe (2) principal et fixés en leur position les uns par rapport aux autres au moyen d'un corps (6a, 6b, 6c, 10, 14) isolant, qui est dirigé sensiblement transversalement à l'axe (2) principal et sur lequel les tronçons (5a, 5b, 5c) conducteurs sont répartis autour de l'axe (2) principal,
**caractérisé en ce que**
le corps (6a, 6b, 6c, 10, 14) isolant a un contour annulaire fermé, les tronçons (5a, 5b, 5c) conducteurs sont disposés sur un pourtour extérieur du corps (6a, 6b, 6c, 10, 14) isolant en étant répartis sur sa surface latérale et les tronçons (5a, 5b, 5c) conducteurs ont chacun des zones (7a, 7b, 7c) de contact avec le corps isolant, les zones (7a, 7b, 7c) de contact étant délimitées dans la direction axiale par des épaulement des tronçons (5a, 5b, 5c) conducteurs.

2. Segment de barre omnibus multipolaire à isolation gazeuse suivant la revendication 1,
**caractérisé en ce que**
le corps (6a, 6b, 6c, 10, 14) isolant a un contour cylindrique creux.

3. Segment de barre omnibus multipolaire à isolation gazeuse suivant la revendication 1 ou 2,
**caractérisé en ce que**
des surfaces de recouvrement du corps (6a, 6b, 6c, 10, 14) isolant sont disposées du côté frontal et ont chacune une section transversale et un évidement au sein de la section transversale, l'évidement et la section transversale de la surface de recouvrement ayant des façonnages géométriques s'écartant l'un de l'autre.

4. Segment de barre omnibus multipolaire à isolation gazeuse suivant l'une des revendications 1 à 3,
**caractérisé en ce que**
le corps (6a, 6b, 6c, 10, 14) isolant a, sur le pourtour extérieur, des méplats dans lesquels sont incorporées des électrodes (11a, 11b, 11c ) de commande de champ.

5. Segment de barre omnibus multipolaire à isolation gazeuse suivant l'une des revendications 2 à 4,
**caractérisé en ce que**
le corps (6a, 6b, 6c, 10, 14) isolant a des surfaces de recouvrement hexagonales, dont les sommets sont arrondis.

6. Segment de barre omnibus multipolaire à isolation gazeuse suivant l'une des revendications 2 à 5,
**caractérisé en ce que** le corps (6a, 6b, 6c, 10, 14) isolant a des surfaces de recouvrement triangulaires, dont les sommets sont arrondis.

7. Segment de barre omnibus multipolaire à isolation gazeuse suivant la revendication 1 à 6,
**caractérisé en ce que** les épaulements délimitent chacun un évidemment de type en rainure dans les tronçons (5a, 5b, 5c) conducteurs.

8. Segment de barre omnibus multipolaire à isolation gazeuse suivant la revendication 1 à 7,
**caractérisé en ce que**
les zones (7a, 7b, 7c) de contact sont traversées chacune par au moins un évidemment (13a, 13b, 13c) traversant.

9. Segment de barre omnibus multipolaire à isolation gazeuse suivant la revendication 8,
**caractérisé en ce que**
les tronçons (5a, 5b, 5c) conducteurs sont conformés en profilé creux, un évidement (9a, 9b, 9c, 9d, 9e, 9f), de section transversale plus grande que l'évidement (13a, 13b, 13c) traversant, étant ménagé dans une partie de paroi, qui est opposée en alignement à la partie de paroi ayant une zone (7a, 7b, 7c) de contact.

10. Segment de barre omnibus multipolaire à isolation gazeuse suivant l'une des revendications 4 à 9,
**caractérisé en ce que**,
dans les électrodes (11a, 11b, 11c) de commande de champ, sont prévus des taraudages de fixation des tronçons (5a, 5b, 5c) conducteurs.

11. Segment de barre omnibus multipolaire à isolation gazeuse suivant l'une des revendications 1 à 10,
**caractérisé en ce que**
plusieurs corps (6a, 6b, 6c, 10, 14) isolants sont disposés de manière échelonnée le long de l'axe (2) principal et les corps (6a, 6b, 6c, 10, 14) isolants ainsi que les tronçons (5a, 5b, 5c) conducteurs sont entourés d'une enveloppe (1) de blindage, qui enveloppe l'axe (2) principal et par rapport à laquelle une mise en position des tronçons (5a, 5b, 5c) conducteurs s'effectue par des isolateurs (3a, 3b) à disque montés du côté frontal sur l'enveloppe (1) de blindage.
